# EUROPEAN PATENT APPLICATION

(11) **EP 4 841 693 A1**
(43) Date of publication of application: **18.11.2026**
(21) Application number: 26176017.7
(22) Date of filing: 30.04.2026
(51) Int. Cl.: H01M 4/136, H01M 4/36, H01M 4/58, H01M 4/62, H01M 4/131, H01M 4/525, H01M 10/00, H01M 4/02

(54) **COMPOSITE POSITIVE ELECTRODE ACTIVE MATERIAL, POSITIVE ELECTRODE, AND RECHARGEABLE LITHIUM BATTERY**

(30) Priority: 14.05.2025 KR 20250062699; 28.04.2026 KR 20260076893
(71) Applicant: SAMSUNG SDI CO., LTD., Yongin-si, Gyeonggi-do 17084 (KR)
(72) Inventor: KIM, Young-Ki, 17084 Yongin-si (KR); KANG, Minchul, 17084 Yongin-si (KR); KIM, Sangmi, 17084 Yongin-si (KR); DOO, Sungwook, 17084 Yongin-si (KR); KANG, Gwiwoon, 17084 Yongin-si (KR); LEE, Soonrewl, 17084 Yongin-si (KR)
(74) Representative: Maiwald GmbH

(57) **Abstract**

A composite positive electrode active material according to some embodiments of the present disclosure may have a particle form, the composite positive electrode active material including a first positive electrode active material in a form of primary particles including a lithium iron phosphate-based compound and a second positive electrode active material in a form of primary particles including a lithium nickel-based composite oxide. The particle form may include a plurality of primary particles of the first positive electrode active material and a plurality of primary particles of the second positive electrode active material.

## Description

### BACKGROUND

### 1. Field

The present disclosure relates to composite positive electrode active materials, positive electrodes, and rechargeable lithium batteries.

### 2. Description of the Related Art

A portable information device (such as a cell phone, a laptop, or a smart phone) or an electric vehicle has used a rechargeable lithium battery having high energy density as a driving power source. Recently, research has been actively conducted to use a rechargeable lithium battery with high energy density as a driving power source for hybrid or electric vehicles or power storage source.

A lithium cobalt-based oxide such as lithium cobalt oxide (LiCoO₂), a lithium nickel-based composite oxide such as lithium nickel-cobalt-manganese oxide (NCM), and a lithium nickel-cobalt-aluminum oxide (NCA), and a lithium iron phosphate-based compound may be used as positive electrode active materials used in rechargeable lithium batteries. The low-cost lithium iron phosphate-based compound, which uses relatively inexpensive iron (Fe) as the main component, is attracting attention due to the high prices of nickel (Ni) and cobalt (Co).

The lithium iron phosphate-based compound has an olivine structure and, thus, has superior cycle-life characteristics compared to other positive electrode active materials. However, when used at high voltage, the cycle-life characteristics of the rechargeable lithium battery deteriorate, which limits the voltage of use of the rechargeable lithium battery.

To this end, a lithium nickel-based composite oxide may be mixed to achieve high energy density, high voltage usage, and high capacity of the rechargeable lithium battery, but there is a problem that high-temperature storage characteristics are deteriorated for the rechargeable lithium battery.

### SUMMARY

The present disclosure provides a composite positive electrode active material, a positive electrode, and a rechargeable lithium battery. The composite positive electrode active material secures price competitiveness, high pellet density, high initial charge/discharge capacity, improved average voltage, high low-temperature discharge capacity, excellent cycle-life and high-rate cycle-life, improved high-temperature storage characteristics, improved capacity per volume and energy density, and low resistance for the rechargeable lithium battery.

A composite positive electrode active material according to some embodiments of the present disclosure may have a particle form, the composite positive electrode active material including a first positive electrode active material in a form of primary particles including a lithium iron phosphate-based compound and a second positive electrode active material in a form of primary particles including a lithium nickel-based composite oxide. The particle form may include a plurality of primary particles of the first positive electrode active material and a plurality of primary particles of the second positive electrode active material.

In some embodiments, the lithium iron phosphate-based compound may include a compound represented by Chemical Formula 1, a compound represented by Chemical Formula 2, or a combination thereof. Chemical Formula 1 is as follows:

LiₐᵢFe₍₁₋ₓ₁₎M¹ₓ₁PO₄

where 0.9≤a1≤1.5 and 0≤x1≤0.4. M¹ may be Al, Ca, Ce, Cr, Cu, La, Mg, Mn, Mo, Nb, Ni, Sn, Sr, Ti, V, W, Y, Zn, Zr, or a combination thereof. Chemical Formula 2 is as follows:

Liₐ₂Mnₓ₂Fe_{(1-x2-y2)}M²_{y2}PO₄

where 0.9≤a2≤1.5, 0.1≤x2≤0.9, 0≤y2<0.9, and x2+y2<1. M² may be Al, Ca, Ce, Cr, Cu, La, Mg, Mo, Nb, Ni, Sn, Sr, Ti, V, W, Y, Zn, Zr, or a combination thereof.

In some embodiments, the lithium iron phosphate-based compound may include Al, Mg, Ti, V, or a combination thereof in an amount ranging from about 0.1 mol% to about 0.5 mol% based on a total metal of the lithium iron phosphate-based compound, excluding lithium.

In some embodiments, an average particle diameter of the primary particles of the first positive electrode active material may be greater than or equal to about 0.1 µm and less than about 2 µm.

In some embodiments, an arithmetic mean size of the primary particles of the first positive electrode active material may be less than or equal to about 200 nm. A standard deviation of an arithmetic mean size of the primary particles of the first positive electrode active material may be less than or equal to about 100 nm.

In some embodiments, the first positive electrode active material may further include a carbon coating layer, positioned on a surface of the primary particles, in an amount ranging from about 0.1 wt% to about 3.9 wt% based on 100 wt% of the first positive electrode active material.

In some embodiments, the lithium nickel-based composite oxide may be represented by:

Liₐ₃Niₓ₃M³_{y3}M⁴z₃O_{2-b3}X_{b3}.

where 0.9≤a3≤1.2, 0.3≤x3≤1, 0≤y3≤0.7, 0≤z3≤0.7, 0.9≤x3+y3+z3≤1.1, and 0≤b3≤0.1. M³ and M⁴ may be each independently Al, B, Ba, Ca, Ce, Co, Cr, Cu, Fe, Mg, Mn, Mo, Nb, Si, Sn, Sr, Ti, V, W, Y, Zn, Zr, or a combination thereof. M³ and M⁴ may be different elements. X may be F, P, S, or a combination thereof.

In some embodiments, in the lithium nickel-based composite oxide, an amount of nickel may be form about 50 mol% to about 80 mol%, based on 100 mol% of a total metal of the lithium nickel-based composite oxide, excluding lithium.

In some embodiments, an average particle diameter of the primary particles of the second positive electrode active material may be from about 2 µm to about 8 µm.

In some embodiments, the particle form of the composite positive electrode active material is a form of secondary particles, and an average particle diameter of secondary particles of the composite positive electrode active material may be from about 3 µm to about 20 µm.

In some embodiments, the composite positive electrode active material may include the first positive electrode active material in an amount from about 50 wt% to about 99 wt% based on 100 wt% of the composite positive electrode active material. The composite positive electrode active material may include the second positive electrode active material in an amount from about 1 wt% to about 50 wt% based on 100 wt% of the composite positive electrode active material.

In some embodiments, a number of primary particles of the second positive electrode active material in the composite positive electrode active material may be 10 or less.

In some embodiments, particles of the composite positive electrode active material may include pores. A porosity of particles of the composite positive electrode active material, which may be a ratio of an area occupied by the pores to a cross-sectional area of the composite positive electrode active material particles, may be from about 10% to about 50%.

A positive electrode includes a positive electrode current collector and a positive electrode active material layer being disposed on the positive electrode current collector and including the composite positive electrode active material as described above.

A rechargeable lithium battery includes the positive electrode as described above, a negative electrode, and an electrolyte.

The composite positive electrode active material according to some embodiments can secure price competitiveness of the rechargeable lithium battery while having a high pellet density, high initial charge/discharge capacity, improved average voltage, high discharge capacity at low temperatures, excellent cycle-life characteristics and high-rate cycle-life characteristics, improved high-temperature storage characteristics, improved capacity per volume and energy density, and low resistance of the rechargeable lithium battery.

### BRIEF DESCRIPTION OF THE DRAWINGS

FIG. 1 is a schematic perspective view showing a portion of a cylindrical rechargeable lithium battery according to some embodiments of the present disclosure.
FIG. 2 is a cross-sectional view schematically showing a prismatic rechargeable lithium battery according to some embodiments of the present disclosure.
FIGS. 3 and 4 are each a schematic exploded perspective view of a pouch-type rechargeable lithium battery according to some embodiments of the present disclosure.
FIG. 5 is a scanning electron microscope photograph of a cross-section of a composite positive electrode active material according to Example 2-1.

### DETAILED DESCRIPTION

Hereinafter, specific embodiments will be described in detail so that those of ordinary skill in the art can easily implement them. However, this disclosure may be embodied in many different forms and is not construed as limited to the embodiments set forth herein.

The terminology used herein is used to describe embodiments and is not intended to limit the present invention. The singular expression includes the plural expression unless the context clearly dictates otherwise.

The term "combination thereof" refers to a mixture, a laminate, a composite, a copolymer, an alloy, a blend, or a reaction product of the constituents.

Terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, or regions are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. When a definition is not otherwise provided, the average particle diameter D₅₀ may mean a diameter of particles having a cumulative volume of 50 vol% in the particle size distribution, wherein the particles are assumed to be spherical. When a definition is not otherwise provided, the average particle diameter refers to a value obtained by measuring the sizes of about 20 randomly selected particles from a scanning electron microscope (SEM) image and calculating an arithmetic mean of the sizes of about 20 randomly selected particles, wherein the size of each particle is defined as a diameter in the case of a spherical particle, and as a square root of a product of a major axis length and a minor axis length in the case of a non-spherical particle.

The word "or" is not to be construed as an exclusive meaning, for example, "A or B" is construed to include A, B, or A+B.

"Metal" is interpreted as a concept including ordinary metals, transition metals and metalloids (semi-metals). As used herein, the term "metalloid" refers to an element having properties intermediate between those of metals and non-metals. Examples of the metalloid include, but are not limited to, boron (B), silicon (Si), germanium (Ge), arsenic (As), antimony (Sb), and tellurium (Te).

As used herein, the term "primary particle" refers to a minimum unit particle that is recognized as a single particle agglomerate when a positive electrode active material is observed using a scanning electron microscope (SEM), in which a grain boundary is not clearly distinguishable or is not substantially observed. A primary particle is a basic unit constituting a secondary particle formed by aggregation of tens to hundreds of particles, and may exist alone or in a state in which a small number (for example, 20 or less) of primary particles are in contact with each other.

As used herein, the term "secondary particle" refers to an agglomerate of primary particles of a given material, and may also be referred to as an assembly in the present disclosure. A secondary particle has a structure in which the primary particles are combined into a single particle form through interparticle contact and bonding, rather than being simply physically mixed. A secondary particle may be recognized as a single particle form in which a plurality of primary particles are aggregated when observed using a scanning electron microscope (SEM). Such a secondary particle is distinguished from a simple mixture in which respective particles are independently dispersed. A secondary particle may be formed by a spray-drying process, or the like.

### Composite Positive Electrode Active Material

A composite positive electrode active material according to some embodiments includes a first positive electrode active material in a form of primary particles including a lithium iron phosphate-based compound and a second positive electrode active material in a form of primary particles including a lithium nickel-based composite oxide. The composite positive electrode active material has a particle form including a plurality of primary particles of the first positive electrode active material and a plurality of primary particles of the second positive electrode active material.

A lithium iron phosphate-based compound that has excellent structural stability, high heat resistance, and price competitiveness, is attracting attention. However, although the lithium iron phosphate-based compound has excellent cycle-life characteristics, cycle-life characteristics of the lithium iron phosphate-based compound deteriorate when used at high voltages, so their usable voltage is limited.

There have been attempts to use a simple mixture of a lithium nickel-based composite oxide to achieve high capacity, but, although this allows for high energy density, high voltage use, and high capacity of the rechargeable lithium battery, high-temperature storage characteristics may be deteriorated for the rechargeable lithium battery.

In some embodiments, a lithium iron phosphate-based compound is used to secure price competitiveness of a rechargeable lithium battery, and a lithium nickel-based composite oxide is included to enable high energy density, high voltage use, and high capacity of a rechargeable lithium battery. Further, the particle form including the primary particles of the lithium iron phosphate-based compound and primary particles of the lithium nickel-based composite oxide, wherein the particles are in a single secondary particle form, more specifically an aggregated structure, is capable of improving low-temperature discharge capacity, low-rate and high-rate cycle-life characteristics, and high-temperature storage characteristics of the rechargeable lithium battery.

### First Positive Electrode Active Material

The first positive electrode active material includes the lithium iron phosphate-based compound. The composite positive electrode active material may secure price competitiveness while also providing excellent structural stability and thermal stability for the rechargeable lithium battery by including a lithium iron phosphate-based compound as the first positive electrode active material.

The lithium iron phosphate-based compound may include a compound represented by Chemical Formula 1, a compound represented by Chemical Formula 2, or a combination thereof. Chemical Formula 1 is as follows:

[Chemical Formula 1] Liₐ₁Fe₍₁₋ₓ₎M¹ₓ₁PO₄.

In Chemical Formula 1, 0.9≤a1≤1.5, 0≤x1≤0.4, and M¹ is Al, Ca, Ce, Cr, Cu, La, Mg, Mn, Mo, Nb, Ni, Sn, Sr, Ti, V, W, Y, Zn, Zr, or a combination thereof. Further, 0.90≤a1≤1.5; for example, 0.90≤a1≤1.2, or 0.95≤a1≤1.1. In addition, 0≤x1≤0.4, 0≤x1≤0.3, 0≤x1≤0.2, 0≤x1≤0.1, or 0.001≤x1≤0.05.

Chemical Formula 2 is as follows:

[Chemical Formula 2] Liₐ₂Mnₓ₂Fe_{(1-x2-y2)}M²_{y2}PO₄.

In Chemical Formula 2, 0.9≤a2≤1.5, 0.1≤x2≤0.9, 0≤y2<0.9, x2+y2<1, and M² is Al, Ca, Ce, Cr, Cu, La, Mg, Mo, Nb, Ni, Sn, Sr, Ti, V, W, Y, Zn, Zr, or a combination thereof. Further, 0.90≤a2≤1.5; for example, 0.90≤a2≤1.2 or 0.95≤a2≤1.1. In addition, 0.1≤x2≤0.9, 0.3≤x2≤0.9, or 0.4≤x2≤0.8, and 0≤y2≤0.4, 0≤y2≤0.3, 0≤y2≤0.2, 0≤y2≤0.1, or 0≤y2≤0.05.

The lithium iron phosphate-based compound may include LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, or a combination thereof, but the lithium iron phosphate-based compound is not limited thereto.

The lithium iron phosphate-based compound may include Al, Mg, Ti, V, or a combination thereof as a type of doping element, and the Al, Mg, Ti, V, or the combination thereof may be included in an amount from about 0.1 mol% to about 0.5 mol%, from about 0.2 mol% to about 0.5 mol%, from about 0.3 mol% to about 0.5 mol%, or about 0.4 mol%, based on a total metal, excluding lithium, in which case the rate characteristics and cycle-life characteristics may be improved for the rechargeable lithium battery.

The lithium iron phosphate-based compound may include Ti, Al, or a combination thereof as a doping element, and an amount of Ti may be from about 0.1 mol% to about 0.5 mol%, from about 0.2 mol% to about 0.5 mol%, from about 0.3 mol% to about 0.5 mol%, or about 0.4 mol%, based on a total metal, excluding lithium, and an amount of Al may be from about 0.1 mol% to about 0.5 mol% based on a total metal, excluding lithium. Rate characteristics and cycle-life characteristics may be improved for the rechargeable lithium battery.

M¹ of Chemical Formula 1 and M² of Chemical Formula 2 may include Al, Mg, Ti, V, or a combination thereof, in which case cycle-life characteristics of the lithium iron phosphate-based positive electrode active material may be improved. In Chemical Formulas 1 and 2, Al, Mg, Ti, V, or a combination thereof may be included in an amount from about 0.1 mol% to about 0.5 mol%, from about 0.2 mol% to about 0.5 mol%, from about 0.3 mol% to about 0.5 mol%, or about 0.4 mol%, based on a total metal, excluding lithium, and cycle-life characteristics of the lithium iron phosphate-based positive electrode active material may be improved. In Chemical Formula 1, 0.001≤x1≤0.005, 0.002≤x1≤0.005, 0.003≤x1≤0.005, or x1=0.004, and, in Chemical Formula 2, 0.001≤x2≤0.005, 0.002≤x2≤0.005, 0.003≤x2≤0.005, or x2=0.004, in which case cycle-life characteristics of the lithium iron phosphate-based positive electrode active material may be improved.

The first positive electrode active material is in the form of primary particles, and an average particle diameter of the primary particles of the first positive electrode active material may be less than about 2 µm. The average particle diameter of the primary particles of the first positive electrode active material may be, for example, greater than or equal to about 0.1 µm less than about 2 µm, from about 0.1 µm to about 1.8 µm, from about 0.1 µm to about 1.6 µm, from about 0.1 µm to about 1.4 µm, from about 0.1 µm to about 1.2 µm, from about 0.1 µm to about 1 µm, from about 0.1 µm to about 0.8 µm, from about 0.2 µm to about 0.8 µm, from about 0.3 µm to about 0.7 µm, or about 0.5 µm. The average particle diameter of the primary particles of the first positive electrode active material may be obtained by measuring the sizes of about 20 primary particles of the first positive electrode active material in an electron microscope image of the surface or cross-section of the positive electrode active material in a form of secondary particles, measuring the size of each secondary particle, and calculating an arithmetic mean of the size of each secondary particle, wherein the size of each particle is defined as a diameter in the case of a spherical particle, and as a square root of a product of a major axis length and a minor axis length in the case of a non-spherical particle. The average particle diameter of the primary particles of the first positive electrode active material may be less than the average particle diameter of the primary particles of the second positive electrode active material described below.

According to some embodiments, the first positive electrode active material may have primary particles that are small and uniform in size. Accordingly, the composite positive electrode active material provides high charge/discharge capacity and excellent cycle-life characteristics of the rechargeable lithium battery.

In addition, as measured by an a scanning electron microscope (SEM) image of a cross-section of the composite positive electrode active material, an arithmetic mean size of the primary particles of the first positive electrode active material constituting the composite positive electrode active material may be less than or equal to about 200 nm, about 50 nm to about 200 nm, or from about 100 nm to about 200 nm, and the standard deviation of the arithmetic mean size may be less than or equal to about 100 nm, less than or equal to about 50 nm, or less than or equal to about 30 nm and may be greater than or equal to about 5 nm, greater than or equal to about 10 nm, or greater than or equal to about 12 nm. The arithmetic mean size and standard deviation of the primary particles of the first positive electrode active material may be obtained by measuring the size of about 20 random primary particles of the first positive electrode active material in an SEM image or TEM image of the surface or cross-section of the composite positive electrode active material, and calculating the arithmetic mean value and the standard deviation value of the arithmetic mean value, wherein the size of each particle is defined as a diameter in the case of a spherical particle, and as a square root of a product of a major axis length and a minor axis length in the case of a non-spherical particle.

The first positive electrode active material may further include a carbon coating layer on the surface of the primary particles. The carbon coating layer may improve electrical conductivity of the first positive electrode active material and decrease the resistance of the positive electrode.

The carbon coating layer may include amorphous carbon and may be formed using, for example, glucose, sucrose, lactose, starch, oligosaccharide, polyoligosaccharide, fructose, cellulose, poly(furfuryl alcohol), polyethylene glycol, a block copolymer of ethylene and ethylene oxide, a vinyl-based resin, a cellulose-based resin, a phenolic resin, a pitch-based resin, a tar-based resin, or a combination thereof.

Specifically, the carbon coating layer may be formed by disposing the carbon raw material on the surface of the first positive electrode active material particles and then performing a firing process. The carbon raw material and primary particles may be mixed and fired to form a carbon coating layer on the surface of the primary particles, or the carbon raw material and secondary particles may be mixed and fired to form a carbon coating layer on the surface of the secondary particles and then pulverized to prepare primary particles having a carbon coating layer.

Based on 100 wt% of the first positive electrode active material, the carbon coating layer may be included in an amount from about 0.1 wt% to about 3.9 wt%, for example, from about 0.5 wt% to about 3.9 wt%, from about 1 wt% to about 3.9 wt%, from about 1.5 wt% to about 3.9 wt%, or from about 1.7 wt% to about 3.9 wt%. The amount of the carbon coating layer may be greater than or equal to about 1.5 wt%, greater than about 1.5 wt%, greater than or equal to about 1.6 wt%, greater than or equal to about 1.7 wt%, or greater than or equal to about 1.8 wt% based on 100 wt% of the first positive electrode active material. The amount of the carbon coating layer may be analyzed by completely combusting the first positive electrode active material at a high temperature from about 1200°C to about 1400°C and in an oxygen atmosphere to convert carbon and sulfur in the first positive electrode active material into CO₂ (or CO) and SO₂ forms, respectively. An amount of the carbon coating layer may be the amount of carbon based on 100 wt% of the first positive electrode active material.

The first positive electrode active material may be manufactured by a known method or may be a commercially available product. For example, the first positive electrode active material may be obtained by pulverizing secondary particles formed by aggregation of a plurality of primary particles and includes a lithium iron phosphate-based compound.

### Second Positive Electrode Active Material

The second positive electrode active material includes a lithium nickel-based composite oxide.

The lithium nickel-based composite oxide may be represented by Chemical Formula 3, which is as follows:

[Chemical Formula 3] Liₐ₃Niₓ₃M³_{y3}M⁴_{z3}O_{2-b3}X_{b3}.

In Chemical Formula 3, 0.9≤a3≤1.2, 0.3≤x3≤1, 0≤y3≤0.7, 0≤z3≤0.7, 0.9≤x3+y3+z3≤1.1, and 0≤b3≤0.1, M³ and M⁴ are each independently Al, B, Ba, Ca, Ce, Co, Cr, Cu, Fe, Mg, Mn, Mo, Nb, Si, Sn, Sr, Ti, V, W, Y, Zn, Zr, or a combination thereof, M³ and M⁴ are different elements, and X is F, P, S, or a combination thereof.

In Chemical Formula 3, 0.5≤x3≤0.8, 0.05≤y3≤0.35, and 0.15≤z3≤0.45; 0.5≤x3≤0.65, 0.05≤y3≤0.2, and 0.3≤z3≤0.45; or 0.55≤x3≤0.65, 0.05≤y3≤0.15, and 0.3≤z3≤0.4.

The lithium nickel-based composite oxide may be represented by Chemical Formula 4 or Chemical Formula 5. Chemical Formula 4 is as follows:

[Chemical Formula 4] Liₐ₄Niₓ₄Co_{y4}M⁵_{z4}O_{2-b4}X_{b4}.

In Chemical Formula 4, 0.9≤a4≤1.2, 0.3≤x4<1, 0<y4≤0.7, 0≤z4≤0.7, 0.9≤x4+y4+z4≤1.1, and 0≤b4≤0.1, M⁵ is Al, B, Ba, Ca, Ce, Cr, Cu, Fe, Mg, Mn, Mo, Nb, Si, Sn, Sr, Ti, V, W, Y, Zn, Zr, or a combination thereof, and X is F, P, S or a combination thereof.

In Chemical Formula 4, 0.5≤x4≤0.8, 0.05≤y4≤0.35, and 0.15≤z4≤0.45; 0.5≤x4≤0.65, 0.05≤y4≤0.2, and 0.3≤z4≤0.45; or 0.55≤x4≤0.65, 0.05≤y4≤0.15, and 0.3≤z4≤0.4.

Chemical Formula 5 is as follows:

[Chemical Formula 5] Liₐ₅Niₓ₅Co_{y5}M⁶_{z5}M⁷_{w5}O_{2-b5}X_{b5}.

In Chemical Formula 5, 0.9≤a5≤1.2, 0.3≤x5≤0.98, 0.01≤y5≤0.69, 0.01≤z5≤0.69, 0≤w5≤0.68, 0.9≤x5+y5+z5+w5≤1.1, and 0≤b5≤0.1, M⁶ is Al, Mn, or a combination thereof, M⁷ is B, Ba, Ca, Ce, Cr, Cu, Fe, Mg, Mo, Nb, Si, Sn, Sr, Ti, V, W, Y, Zn, Zr, or a combination thereof, and X is F, P, S, or a combination thereof.

In Chemical Formula 5, 0.5≤x5≤0.8, 0.05≤y5≤0.35, 0.15≤z5≤0.45, and 0≤w5≤0.3; 0.5≤x5≤0.65, 0.05≤y5≤0.2, 0.3≤z5≤0.45, and 0≤w5≤0.15; or 0.55≤x5≤0.65, 0.05≤y5≤0.15, 0.3≤z5≤0.4, and 0≤w5≤0.1.

The second positive electrode active material may be a high nickel-based positive electrode active material. In the lithium nickel-based composite oxide, the amount of nickel may be greater than or equal to about 50 mol% based on 100 mol% of the total metal, excluding lithium and may be, for example, from about 50 mol% to about 100 mol%, from about 50 mol% to about 99 mol%, from about 50 mol% to about 90 mol%, from about 50 mol% to about 85 mol%, from about 50 mol% to about 80 mol%, from about 50 mol% to about 75 mol%, from about 50 mol% to about 70 mol%, from about 50 mol% to about 65 mol%, or from about 55 mol% to about 65 mol%. The composite positive electrode active material includes a second positive electrode active material including a lithium nickel-based composite oxide in which the nickel content satisfies the above range, and the first positive electrode active material including the lithium iron phosphate-based compound, and may improve capacity, energy density, and cycle-life characteristics of the rechargeable lithium battery.

The second positive electrode active material is in a form of primary particles, and an average particle diameter of the primary particles of the second positive electrode active material may be greater than or equal to about 2 µm. An average particle diameter of the primary particles of the second positive electrode active material may be, for example, from about 2 µm to about 8 µm, from about 2 µm to about 5 µm, or from about 2 µm to about 4 µm. The average particle diameter of the primary particles of the second positive electrode active material may be greater than the average particle diameter of the primary particles of the aforementioned first positive electrode active material. That is, the primary particles of the first positive electrode active material and the primary particles of the second positive electrode active material within the secondary particles may be distinguished based on particle size. The average particle diameter may be obtained by measuring the sizes of about 20 primary particles of the second positive electrode active material from a scanning electron microscope image -wherein, in the case of spherical particles, the diameter is measured, and in the case of non-spherical particles, the square root of the product of the major axis length and the minor axis length is measured-and then calculating the arithmetic mean of the size of each primary particle of the second positive electrode active material.

The second positive electrode active material may be manufactured by a known method or may be a commercially available product. For example, the second positive electrode active material may be prepared by mixing a nickel-based precursor with a lithium source and then performing heat treatment in an oxygen atmosphere to form a second positive electrode active material having a single-particle form.

Here, the single particle form may refer to a structure in which particles exist as an independent phase without mutual aggregation in terms of morphology, and may include a structure that substantially does not have grain boundaries within the particle and is composed of a single particle existing independently. The single particle may be expressed as a monolithic structure, a non-aggregated structure, or a monolith structure, and may be a single crystal.

Here, the single particle may correspond to a primary particle constituting a secondary particle in the composite positive electrode active material described below, and thus, in the present specification, the single particle may be used in the same meaning as the primary particle.

### Composite Positive Electrode Active Material

The composite positive electrode active material has a particle form including a plurality of primary particles of the first positive electrode active material and a plurality of primary particles of the second positive electrode active material. The particle form of the composite positive electrode active material may be a form of secondary particles or an assembly form in which the above-mentioned primary particles and primary particles are agglomerated. Primary particles of the first positive electrode active material and primary particles of the second positive electrode active material may exist within the composite positive electrode active material particles. The composite positive electrode active material particles are formed by agglomeration of a plurality of primary particles. Some of the primary particles are the primary particles of the first positive electrode active material, and the remaining portions are the primary particles of the second positive electrode active material. This structure is distinguished from a core-shell structure in which the particles of the first positive electrode active material are coated around a surface of the core of the second positive electrode active material particle, thereby having a shell structure. In the present disclosure, the particle form of the composite positive electrode active material may be referred to as a form of secondary particles or an assembly form. Particles described as the form of the secondary particles, or the assembly form should be understood to refer to composite positive electrode active material particles.

The particle form of the composite positive electrode active material according to some embodiments is different from the conventional form in which a lithium iron phosphate-based compound and a lithium nickel-based composite oxide are mixed. When conventionally, a lithium iron phosphate-based compound and a lithium nickel-based composite oxide are mixed and used as a positive electrode active material, there is a problem in that high-temperature storage characteristics deteriorate due to a creation of spaces between the particles of the lithium iron phosphate-based compound and the particles of the lithium nickel-based composite oxide as charge and discharge are repeated after the formation of the electrode plate. However, the composite positive electrode active material according to some embodiments may solve the above problem by having a particle form, specifically, single secondary particle form by agglomerating primary particles of the first positive electrode active material including a lithium iron phosphate-based compound and primary particles of the second positive electrode active material including a lithium nickel-based composite oxide, more specifically, an assembly form.

The composite positive electrode active material particles may have a spherical or elliptical spherical shape by closely agglomerating the primary particles of the first positive electrode active material and the primary particles of the second positive electrode active material. An average particle diameter of the composite positive electrode active material may be, for example, about 3 µm to about 20 µm, about 6 µm to about 20 µm, about 6 µm to about 18 µm, about 8 µm to about 18 µm, about 10 µm to about 18 µm, or about 12 µm to about 18 µm. An average particle diameter of the composite positive electrode active material particles may be obtained by randomly selecting about 20 composite positive electrode active material particles from an electron microscope image of the composite positive electrode active material, measuring the size of each secondary particle, and calculating an arithmetic mean of the size of each secondary particle, wherein the size of each particle is defined as a diameter in the case of a spherical particle, and as a square root of a product of a major axis length and a minor axis length in the case of a non-spherical particle.

The amounts of the first positive electrode active material and the second positive electrode active material in the composite positive electrode active material may be appropriately controlled. The first positive electrode active material may be included in an amount from about 50 wt% to about 99 wt%, from about 55 wt% to about 95 wt%, or from about 60 wt% to about 90 wt% based on 100 wt% of the composite positive electrode active material, and the second positive electrode active material may be included in an amount from about 1 wt% to about 50 wt%, from about 5 wt% to about 45 wt%, or from about 10 wt% to about 40 wt% based on 100 wt% of the composite positive electrode active material. If the first positive electrode active material and the second positive electrode active material in the composite positive electrode active material are included so as to satisfy the above ranges, the battery may operate at high voltage, and the battery performance, including the initial charge/discharge capacity, discharge capacity at low temperature (e.g., -20°C), and high-temperature storage characteristics, may be improved for the rechargeable lithium battery.

The composite positive electrode active material may further include a carbon coating layer on the particle surface of the composite positive electrode active material. The carbon coating layer may improve electrical conductivity of the composite positive electrode active material and thereby reduce the resistance of the positive electrode including the same.

The carbon coating layer may be the same as the carbon coating layer on the surface of the primary particles of the first positive electrode active material of the aforementioned composite positive electrode active material, and a description of the carbon coating layer is, therefore, omitted in this section.

The number of primary particles of the second positive electrode active material in the composite positive electrode active material may be 10 or less, for example, 9 or less, 8 or less, 7 or less, or 6 or less, and greater than zero, 1 or more, 2 or more, or 3 or more. For example, the number of primary particles of the second positive electrode active material in the composite positive electrode active material may be in a range of 1 to 10, 2 to 10, 3 to 10, 3 to 9, 3 to 8, 3 to 7, or 3 to 6. The number of primary particles of the second positive electrode active material in the composite positive electrode active material may be measured by photographing a cross-section or surface of the composite positive electrode active material using a scanning electron microscope. The first positive electrode active material and the second positive electrode active material within the composite positive electrode active material may be distinguished by particle size, and the number of primary particles of the second positive electrode active material may be determined by counting the number of particles having a particle size of greater than or equal to about 2 µm within a single composite positive electrode active material particle, wherein the particle size refers to a diameter in the case of spherical particles and to a square root of a product of a major axis length and a minor axis length in the case of non-spherical particles. Here, the number of primary particles of the second positive electrode active material may be an average value of the numbers of primary particles of the second positive electrode active material in each of a plurality of composite positive electrode active material particles.

Particles of the composite positive electrode active material may include pores, and the porosity, which is the ratio of the area occupied by the pores to the cross-sectional area of the composite positive electrode active material particle, may be from about 10% to about 50%, for example, from about 10% to about 40%, from about 10% to about 30%, or from about 10% to about 25%. The porosity may refer to a ratio of the area occupied by pores in the cross-sectional area of the composite positive electrode active material particles. The porosity may be obtained by cutting a composite positive electrode active material particle using a focused ion beam (FIB) to obtain a cross-section and measuring a ratio of the area occupied by pores within the cross-section of particle of the composite positive electrode active material particle to a cross-sectional area of the composite positive electrode active material particle using an image analysis program such as Image J on a scanning electron microscope image of the cross-section of the secondary particle. A cross-section of the composite positive electrode active materials may be obtained by cutting the composite positive electrode active materials using a focused ion beam (FIB). An image from a scanning electron microscope (SEM) may be acquired, for example, at a magnification of 5,000× to 50,000× under the same imaging conditions. Image analysis may be performed using a fixed threshold value or a consistent threshold-setting method applied equally to all samples. The porosity of the composite positive electrode active materials may be an average value of porosities measured with respect to a plurality of composite positive electrode active materials, and may be, for example, obtained by measuring the porosity of at least 20 individual composite positive electrode active materials and calculating an average value of the porosity at least 20 individual composite positive electrode active materials. If the porosity within the composite positive electrode active material particles satisfies the above ranges, the primary particles may be filled between the pores within the secondary particles during positive electrode compressing, thereby improving the pellet density or positive electrode density, and, thus, improving the capacity characteristics and energy density.

A pellet density of the composite positive electrode active material may be greater than or equal to about 2.4 g/cc and may be from about 2.4 g/cc to about 3 g/cc, from about 2.45 g/cc to about 2.95 g/cc, from about 2.5 g/cc to about 2.9 g/cc, or from about 2.55 g/cc to about 2.85 g/cc. The pellet density of the composite positive electrode active material may be measured by placing 3 g of the composite positive electrode active material in a mold, maintaining the composite positive electrode active material in the mold at 4 tons for 30 seconds at a temperature of 25°C, measuring the thickness of the pellet, calculating the pellet volume using the thickness of the pellet and the diameter of the mold, and dividing the mass of the composite positive electrode active material by the calculated volume. If the porosity of the composite positive electrode active material particles satisfies the above ranges, the primary particles may be further filled between the pores in the secondary particles during positive electrode compressing, and accordingly, the pellet density of the composite positive electrode active material may be further improved as in the above ranges, and accordingly, the energy density of the battery may be further increased.

### Positive Electrode

According to some embodiments, a positive electrode includes a positive electrode current collector and a positive electrode active material layer being disposed on the positive electrode current collector and including the aforementioned composite positive electrode active material. According to some embodiments, the positive electrode can improve the overall battery performance by including the composite positive electrode active material described above, and specifically, the discharge capacity at low temperature and the high temperature storage characteristics may be improved for the rechargeable lithium battery.

### Positive Electrode Current Collector

The positive electrode current collector is not particularly limited as long as the positive electrode current collector has conductivity and does not cause an undesirable chemical change in the rechargeable lithium battery and may be an aluminum foil or a stainless-steel foil having a thickness from about 10 µm to about 15 µm.

### Positive Electrode Active Material Layer

The positive electrode active material layer includes the aforementioned composite positive electrode active material. Specific details of the composite positive electrode active material may be the same as described above.

An amount of the composite positive electrode active material may be from about 60 wt% to about 99.9 wt%, from about 70 wt% to about 99.8 wt%, from about 80 wt% to about 99 wt%, or from about 90 wt% to about 98 wt% based on 100 wt% of the positive electrode active material layer.

The positive electrode active material layer may optionally further include a binder, a conductive material, or a combination thereof.

The binder may serve to adhere the composite positive electrode active material particles well to each other and also to adhere the composite positive electrode active material well to the positive electrode current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, polyester resin, or nylon, but the binder is not limited thereto.

The conductive material is included to provide electrode conductivity, and any electrically conductive material may be used as a conductive material unless the electrically conductive material causes an undesirable chemical change in a battery. Examples of the conductive material may include a carbon-based material such as natural graphite, artificial graphite, carbon black, acetylene black, Ketjen black, a carbon fiber, a carbon nanofiber, or a carbon nanotube; a metal-based material of a metal powder or a metal fiber including copper, nickel, aluminum, or silver; a conductive polymer such as a polyphenylene derivative; or a mixture thereof.

In the positive electrode active material layer, an amount of the binder may be from about 0.1 wt% to about 5 wt% based on 100 wt% of the positive electrode active material layer, and an amount of the conductive material may be from about 0.1 wt% to about 5 wt% based on 100 wt% of the positive electrode active material layer.

The positive electrode active material layer may further include other positive electrode active materials within a range that does not impede the purpose of the present disclosure in addition to the aforementioned components or may further include an irreversible positive electrode additive.

In addition to the aforementioned composite positive electrode active material, the positive electrode active material layer may further include a positive electrode active material having a form of primary particles and including the aforementioned lithium iron phosphate-based compound (hereinafter, "third positive electrode active material") and/or a positive electrode active material having a form of primary particles and including the aforementioned lithium nickel-based composite oxide (hereinafter, "fourth positive electrode active material"). Here, the third positive electrode active material and/or the fourth positive electrode active material may each independently be those in which the first positive electrode active material and/or the second positive electrode active material included in the composite positive electrode active material are not assembled and are present in a separated state. In this case, the average particle diameter of the primary particles of the third positive electrode active material may be the same as described above for the first positive electrode active material, and the average particle diameter of the primary particles of the fourth positive electrode active material may be the same as described above for the second positive electrode active material. Here, the third positive electrode active material and/or the fourth positive electrode active material are present in a non-aggregated, separated state without being agglomerated with the above-described composite positive electrode active material to form an assembled structure.

When the positive electrode active material layer further includes the third positive electrode active material and/or the fourth positive electrode active material in addition to the composite positive electrode active material, a weight ratio of the composite positive electrode active material to the third positive electrode active material, the fourth positive electrode active material, or a combination thereof may be from about 1:9 to about 9:1 and may be appropriately added depending on the purpose. The third positive electrode active material may further include the aforementioned carbon coating layer on the surface of the primary particle, and, since the specific details of the carbon coating layer are as described above, those details are omitted in this section.

The irreversible positive electrode additive refers to a compound that acts as a sacrificial positive electrode that can compensate for the conversion to irreversible Li that no longer participates in the charge/discharge reaction by participating in the formation of a SEI (solid electrolyte interface) film on the negative electrode surface during charge/discharge. The irreversible positive electrode additive is a compound that can be decomposed during the formation process to provide Li and does not participate in the subsequent charge/discharge process. By adding such an irreversible positive electrode additive, the consumed lithium may be replenished, thereby compensating for lithium loss and improving the energy density, cycle-life, and stability of the rechargeable lithium battery.

The irreversible positive electrode additive may include a lithium iron-based oxide, a lithium cobalt-based oxide, a lithium nickel-based oxide, or a combination thereof.

The lithium iron-based oxide may be Li₅FeO₄, LiFeO₂, LiFe₅O₈, or a combination thereof, and using Li₅FeO₄ may provide a lot of lithium in the formation process, which may greatly compensate for irreversible lithium, and, thus, greatly obtain the effect of the irreversible positive electrode additive.

The lithium cobalt-based oxide may be Li₆CoO₄, and the use of Li₆CoO₄ may provide a lot of lithium in the formation process, which can greatly compensate for the irreversible lithium and, thus, greatly obtain the effect of the irreversible positive electrode additive.

The lithium nickel-based oxide may be Li₂NiO₂, and the use of Li₂NiO₂ may provide a lot of lithium in the formation process, which may consequently compensate for a lot of irreversible lithium and, thus, greatly obtain the effect of the irreversible positive electrode additive.

An average particle diameter D₅₀ of the irreversible positive electrode additive is not specifically limited but may be, for example, from about 0.5 µm to about 20 µm, for example, from about 0.5 µm to about 10 µm, from about 0.5 µm to about 5 µm, or from about 0.5 µm to about 3 µm.

### Rechargeable Lithium Battery

A rechargeable lithium battery according to some embodiments includes the aforementioned positive electrode, a negative electrode, and an electrolyte. The rechargeable lithium battery may include a positive electrode, a negative electrode, a separator between the positive electrode and the negative electrode, and an electrolyte.

The rechargeable lithium battery according to some embodiments may have improved battery performance overall by including the aforementioned positive electrode active material, and, specifically, may provide improved low-temperature capacity and cycle-life characteristics of the rechargeable lithium battery.

The rechargeable lithium battery may have an improved low-temperature capacity such that the discharge capacity at a low temperature (e.g., about -20°C) is greater than or equal to about 90 mAh/g. The discharge capacity of the rechargeable lithium battery at a low temperature (-20°C) may be greater than or equal to about 91 mAh/g, greater than or equal to about 91.5mAh/g, greater than or equal to about 92 mAh/g, or greater than or equal to about 92.5 mAh/g and may be less than or equal to about 110 mAh/g, or less than or equal to about 105 mAh/g. The low-temperature discharge capacity of the rechargeable lithium battery may be measured according to the method described in the Evaluation Examples below.

In addition, when the high-temperature storage characteristics may be evaluated by measuring the capacity retention rate after leaving the rechargeable lithium battery at a high temperature (45°C) for 7 days, the high-temperature capacity retention rate is greater than or equal to about 80%, indicating that the high-temperature storage characteristics may be improved for the rechargeable lithium battery. The high-temperature capacity retention rate of the rechargeable lithium battery may be greater than or equal to about 81%, greater than or equal to about 82%, greater than or equal to about 83%, greater than or equal to about 84%, or greater than or equal to about 85% and may be less than or equal to about 100%, less than or equal to about 95%, or less than or equal to about 90%.

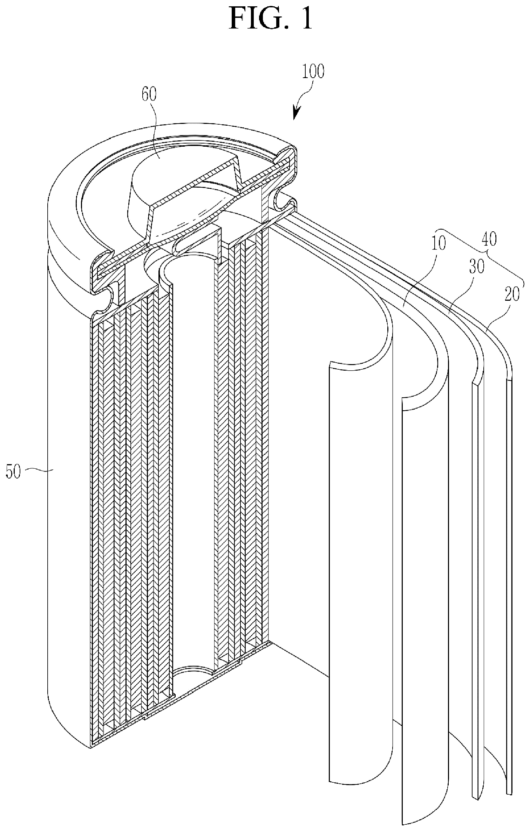

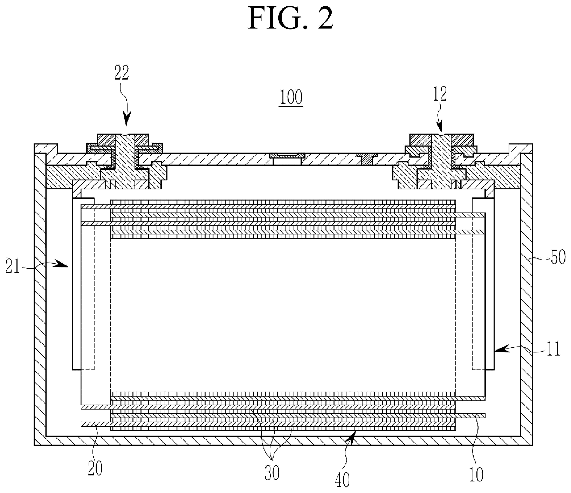

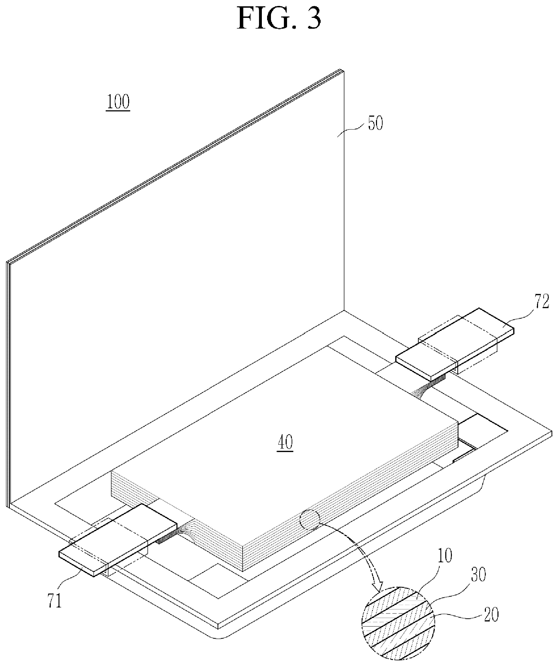

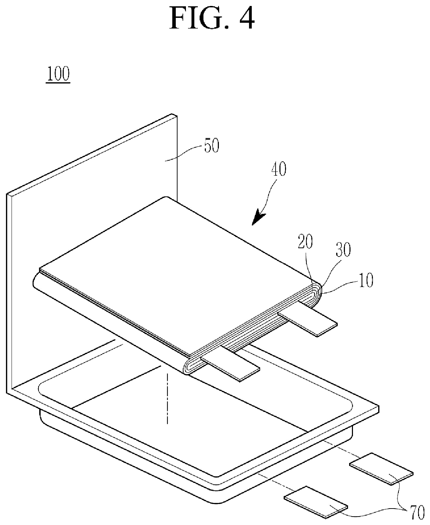

The rechargeable lithium battery may be classified into cylindrical, prismatic, pouch-shaped, or coin-shaped depending on their shapes. FIG. 1 is a schematic view showing a cross-section of a cylindrical rechargeable lithium battery cut along a vertical axis and an electrode assembly 40 extending from the cylindrical rechargeable lithium battery according to some embodiments of the present disclosure. FIG. 2 is a cross-sectional view of a prismatic rechargeable lithium battery. FIGS. 3 and 4 are each a schematic exploded perspective view of a pouch-type rechargeable lithium battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown).

The rechargeable lithium battery 100 may include a sealer 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. The rechargeable lithium battery 100 may include an electrode tab 70 that serves as an electrical path for conducting current formed in an electrode assembly 40 to the outside. The electrode tab 70 may be disposed in the same direction as in FIG. 4, or the positive electrode tab 71 and the negative electrode tab 72 may be disposed in opposite directions as in FIG. 3.

### Negative Electrode

A negative electrode for a rechargeable lithium battery includes a negative electrode current collector and a negative electrode active material layer on the negative electrode current collector. The negative electrode active material layer includes a negative electrode active material and may optionally further include a binder, a conductive material, or a combination thereof.

The negative electrode current collector is not particularly limited as long as the negative electrode current collector has conductivity without causing undesirable chemical changes in the rechargeable lithium battery and may be a copper foil having a thickness from about 10 µm to about 15 µm.

The negative electrode active material includes a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may be a carbon-based negative electrode active material, for example, crystalline carbon, amorphous carbon, or a combination thereof. The crystalline carbon may be irregular, or sheet, flake, spherical, or fiber shaped natural graphite or artificial graphite. The amorphous carbon may be a soft carbon, a hard carbon, a mesophase pitch carbonization product, or calcined coke.

As the alloy of lithium metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping and dedoping lithium may be a Si-based negative electrode active material or a Sn-based negative electrode active material. The Si-based negative electrode active material may be silicon, a silicon-carbon composite, SiOₓ (0<x≤2), a Si-Q alloy (wherein Q is an element selected from an alkali metal, an alkaline earth metal, a Group 13 element, a Group 14 element [excluding Si], a Group 15 element, a Group 16 element, a transition metal, a rare earth element, and a combination thereof and may be, for example, selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. The average particle diameter D₅₀ of the silicon-carbon composite particles may be, for example, from about 0.5 µm to about 20 µm. According to some embodiments, the silicon-carbon composite may be in the form of silicon particles and amorphous carbon coated on the surface of the silicon particles. The silicon-carbon composite may include a secondary particle (core) in which silicon primary particles are assembled and an amorphous carbon coating layer (shell) on a surface of the secondary particle. The amorphous carbon may also be present between the silicon primary particles; for example, the silicon primary particles may be coated with amorphous carbon. The secondary particles may exist dispersed in an amorphous carbon matrix.

The silicon-carbon composite may further include crystalline carbon. The silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, or calcined coke.

When the silicon-carbon composite includes silicon and amorphous carbon, an amount of the silicon may be from about 10 wt% to about 50 wt%, and an amount of the amorphous carbon may be from about 50 wt% to about 90 wt% based on 100 wt% of the silicon-carbon composite. In addition, when the composite includes silicon, amorphous carbon, and crystalline carbon, an amount of silicon may be from about 10 wt% to about 70 wt%, an amount of crystalline carbon may be from about 1 wt% to about 60 wt%, and an amount of amorphous carbon may be from about 15 wt% to about 50 wt% based on 100 wt% of the silicon-carbon composite.

Additionally, a thickness of the amorphous carbon coating layer may be from about 5 nm to about 100 nm. An average particle diameter D₅₀ of the silicon particles (primary particles) may be from about 10 nm to about 1 µm, or from about 10 nm to about 200 nm. The silicon particles may be present as silicon alone, in the form of a silicon alloy, or in an oxidized form. The oxidized form of the silicon may be represented as SiOₓ (0<x≤2). The atomic ratio of Si:O, which indicates the degree of oxidation, may be from about 99:1 to about 33:67. When a definition is not otherwise provided, an average particle diameter D₅₀ indicates a diameter of particle where a cumulative volume is about 50 vol% in a particle size distribution.

The Si-based negative electrode active material or Sn-based negative electrode active material may be mixed with the carbon-based negative electrode active material. When using a mixture of a Si-based negative electrode active material or a Sn-based negative electrode active material and a carbon-based negative electrode active material, a mixing ratio may be from about 1:99 to about 90:10 by weight.

The negative electrode active material may be included in an amount from about 90 wt% to about 99.8 wt%, or from about 94 wt% to about 99 wt%, based on 100 wt% of the negative electrode active material layer.

The binder serves to well adhere the negative electrode active material particles to each other and also to adhere the negative electrode active material to the negative electrode current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless it causes an undesirable chemical change. Examples of the conductive material include a carbon-based material such as natural graphite, artificial graphite, carbon black, acetylene black, Ketjen black, a carbon fiber, a carbon nanofiber, or a carbon nanotube; a metal-based material of a metal powder or a metal fiber including copper, nickel, aluminum, or silver; a conductive polymer such as a polyphenylene derivative; or a mixture thereof.

An amount of the binder may be from about 0.1 wt% to about 5 wt% based on 100 wt% of the negative electrode active material layer, and an amount of the conductive material may be from about 0.1 wt% to about 5 wt% based on 100 wt% of the negative electrode active material layer.

### Electrolyte

An electrolyte for a rechargeable lithium battery is an electrolyte solution and includes a non-aqueous organic solvent and a lithium salt.

The non-aqueous organic solvent serves as a medium for transmitting ions taking part in the electrochemical reaction of a battery. The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC). The ester-based solvent may include methyl acetate, ethyl acetate, n-propyl acetate, t-butyl acetate, methyl propionate, ethyl propionate, decanolide, mevalonolactone, valerolactone, or caprolactone. The ether-based solvent may include dibutyl ether, tetraglyme, diglyme, dimethoxyethane, 2-methyltetrahydrofuran, 2,5-dimethyltetrahydrofuran, or tetrahydrofuran. The ketone-based solvent may include cyclohexanone. The alcohol-based solvent may include ethanol or isopropyl alcohol and the aprotic solvent may include nitriles such as R-CN (wherein R is a C2 to C20 linear, branched, or cyclic hydrocarbon group, and may have a double bond, an aromatic ring, or an ether group); amides such as dimethylformamide; dioxolanes such as 1,3-dioxolane, or 1,4-dioxolane; or sulfolanes.

The non-aqueous organic solvent may be used alone or in combination of two or more, and when two or more types are used in combination, the mixing ratio may be appropriately adjusted depending on intended battery performances, which is widely understood by those working in the relevant field.

When using a carbonate-based solvent, a cyclic carbonate and a chain carbonate may be mixed and used, and the cyclic carbonate and the chain carbonate may be mixed in a volume ratio from about 1:1 to about 1:9.

The non-aqueous organic solvent may further include an aromatic hydrocarbon-based organic solvent. A carbonate-based solvent and an aromatic hydrocarbon-based organic solvent may be mixed and used in a volume ratio from about 1:1 to about 30:1.

The electrolyte solution may further include vinylethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity. Thus, excellent performance can be achieved, and lithium ions can move effectively.

### Separator

Depending on the type of rechargeable lithium battery, a separator may exist between the positive and negative electrodes. The separator may include polyethylene, polypropylene, polyvinylidene fluoride, or a multilayer film of two or more layers and may be a mixed multilayer film such as a polyethylene/polypropylene two-layer separator, a polyethylene/polypropylene/polyethylene three-layer separator, or a polypropylene/polyethylene/polypropylene three-layer separator.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, polytetrafluoroethylene (e.g., TEFLON^{®}), or a copolymer or mixture of two or more thereof. The porous substrate may include glass fibers, or may comprise a composite membrane of polymer and glass fibers.

The porous substrate may have a thickness from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles of Al₂O₃, SiO₂, TiO₂, SnO₂, CeO₂, MgO, NiO, CaO, Ga₂O₃, ZnO, ZrO₂, Y₂O₃, SrTiO₃, BaTiO₃, Mg(OH)₂, boehmite, and a combination thereof, but the inorganic material is not limited thereto. An average particle diameter D₅₀ of the inorganic particles may be from about 1 nm to about 2000 nm, for example, from about 100 nm to about 1000 nm, or from about 100 nm to about 700 nm.

The organic material and the inorganic material may be mixed in one coating layer, or a coating layer including an organic material and a coating layer including an inorganic material may be stacked.

A thickness of the coating layer may be from about 0.5 µm to about 20 µm, for example, from about 1 µm to about 10 µm or from about 1 µm to about 5 µm.

Hereinafter, examples and comparative examples of the present invention are described. However, the examples described below are only some embodiments of the present invention, and the present invention is not limited to the examples described below.

### Example 1-1

### (1) Preparation of Composite Positive Electrode Active Material

### (Preparation of a first electrode active material)

FePO₄ as an iron phosphate-based precursor and Li₂CO₃ as a lithium raw material were mixed in a molar ratio of 2:1 to prepare a raw material mixture. In addition, a carbon raw material was prepared by mixing glucose and polyethylene glycol in a weight ratio of 5:5. Further, 90 wt% of the raw material mixture and 10 wt% of the carbon raw material were mixed to form a mixture, and distilled water as a second solvent was added to the mixture to wet-mill the mixture into a first slurry. The wet milling was carried out using a ball milling apparatus. Specifically, a mixture of about 90 wt% of the raw material mixture and about 10 wt% of the carbon source material was introduced into a milling container having a capacity of about 5 L, together with about 3 kg of zirconia balls and about 2 kg of water, and the wet milling was performed by rotating the container at a rotational speed of about 100 rpm for about 3 hours. During the wet milling, TiO₂ as a titanium-based raw material, and the amount was adjusted such that Ti accounted for 0.4 mol% based on a total metal, excluding lithium, of a finally obtained lithium iron phosphate-based compound.

The wet-milled slurry was fed into a spray dryer (Büchi Mini Spray Dryer B-290) at 0.5 kg/min and then spray-dried at 200°C to obtain a first dried product. This first dried product was fired at 750°C for 8 hours to obtain a first fired product. The first fired product was pulverized at 6000 rpm by using an air jet-mill to obtain a first positive electrode active material. Through the pulverization process, the first fired product (which included the lithium iron phosphate-based compound in the form of secondary particles (or assemblies) in which a plurality of the primary particles was agglomerated) was pulverized into the first positive electrode active material in which the plurality of primary particles was not agglomerated but separated. The first positive electrode active material had a composition of LiFe_{0.996}Ti_{0.004}PO₄ and was in the form of primary particles.

### (Preparation of a second electrode active material)

Ni_{0.6}Co_{0.1}Mn_{0.3}(OH)₂ and LiOH were mixed at a molar ratio of 1:1 and subjected to a first heat treatment at 850 °C for 15 hours in an oxygen atmosphere to prepare a lithium nickel-based composite oxide having a composition of LiNi_{0.6}Co_{0.1}Mn_{0.3}O₂ in the form of single particles having an average particle diameter of 3 µm.

Thereafter, the lithium nickel-based composite oxide in the form of single particles and tungsten oxide (WO₃) were introduced into a Henschel mixer and mixed for 30 minutes to prepare a mixture. At this time, the tungsten content derived from the tungsten oxide was adjusted to 0.25 mol% based on 100 mol% of all metals excluding lithium in the final second positive electrode active material.

The mixture was then subjected to a second heat treatment to obtain a second positive electrode active material. The heat treatment was performed by including a temperature-ramping step of increasing the temperature from 25 °C to 400 °C at a rate of 6.25 °C/min, and a holding step of maintaining the temperature at 400 °C for 5 hours. The second positive electrode active material has a composition of LiNi_{0.5985}Co_{0.09975}Mn_{0.29925}W_{0.0025}O₂ and is in the form of single particles having an average particle diameter of about 3 µm. The single particles of the second positive electrode active material correspond to primary particles constituting secondary particles in a composite positive electrode active material described below, and are used herein with the same meaning as primary particles.

### (Preparation of Composite Positive Electrode Active Material)

The first positive electrode active material and the second positive electrode active material were mixed at a weight ratio of 9:1 using a mixer (L5M-A) at 15 rpm for 30 minutes, and water was added as a solvent to perform wet milling, thereby preparing a second slurry. The second slurry was added to a spray dryer (Büchi Mini Spray Dryer B-290) at 0.5 kg/min and then spray-dried at 200°C to obtain a second dried product. The wet milling was performed using a ball milling apparatus. Specifically, about 3 kg of zirconia balls, about 2 kg of water, and about 2 kg of a mixture of the first positive electrode active material and the second positive electrode active material mixed at a weight ratio of 9:1 were introduced into a milling container having a capacity of about 5 L, and the container was rotated at a rotational speed of about 50 rpm for about 1 hour. The second dried product was a composite positive electrode active material in the form of secondary particles in which the primary particles of the first positive electrode active material and the primary particles of the second positive electrode active material were agglomerated.

### (2) Manufacturing of Positive Electrode

The composite positive electrode active material was mixed with polyvinylidene fluoride as a binder and carbon nanotube as a conductive material in a weight ratio of 96:2:2 (positive electrode active material:binder:conductive material) to prepare a positive electrode active material composition. This composition was dispersed in an N-methyl pyrrolidone solvent to prepare a positive electrode active material slurry, which was coated on a 15-µm-thick Al foil and then dried and compressed to manufacture a positive electrode.

### (3) Manufacturing of Rechargeable Lithium Battery Cell

97.5 wt% of graphite as a negative electrode active material, and 1.5 wt% of carboxymethyl cellulose and 1 wt% of styrene butadiene rubber as a binder were dispersed in distilled water to prepare a negative electrode active material slurry. This slurry was coated on a 10-µm-thick Cu foil and then dried and compressed to manufacture a negative electrode.

Between the positive electrode and the negative electrode, a 10-µm-thick polyethylene separator was disposed to manufacture an electrode assembly, which was inserted into a case, and an electrolyte was injected into the case to manufacture a rechargeable lithium battery cell (a pouch-type cell of 100 mAh level). The electrolyte was prepared by mixing EC (ethylenecarbonate):EMC (ethylmethylcarbonate):DMC (dimethylcarbonate) in a volume ratio of 2:4:4 and dissolving 1.15 M LiPF₆ in the mixed solvent.

### Examples 1-2 to 1-4 and Examples 2-1 to 2-2

Composite positive electrode active materials, positive electrodes, and rechargeable lithium battery cells according to Examples 1-2 to 1-4 and Examples 2-1 to 2-2 were manufactured in substantially the same manner as Example 1-1, except that, in the process of the section '(1) Preparation of Composite Positive Electrode Active Material' of Example 1, when preparing the first positive electrode active material, the weight ratios of Mn₂O₃ as a manganese raw material were stoichiometrically adjusted to have the compositions shown in Table 1 (thereby obtaining the first positive electrode active material), and, when preparing the second slurry, the obtained first positive electrode active material and the prepared second positive electrode active material were mixed in each weight ratio described in Table 1 instead of mixing them in a weight ratio of 9:1.

**Table 1:**

| | Composition of first positive electrode active material | Weight ratio of first positive electrode active material and second positive electrode active material |
|---|---|---|
| Example 1-1 | LiFe_{0.996}T1_{0.004}PO₄ | 9:1 |
| Example 1-2 | LiFe_{0.996}T1_{0.004}PO₄ | 8:2 |
| Example 1-3 | LiFe_{0.996}T1_{0.004}PO₄ | 7:3 |
| Example 1-4 | LiFe_{0.996}T1_{0.004}PO₄ | 6:4 |
| Example 2-1 | Li(Fe_{0.4}Mn_{0.6})_{0.996}Ti0.₀₀₄PO₄ | 7:3 |
| Example 2-2 | Li(Fe_{0.4}Mn_{0.6})_{0.996}Ti0_{.004}PO₄ | 6:4 |

### Comparative Example 1

A positive electrode and a rechargeable lithium battery cell were manufactured substantially in the same manner as in Example 1-1, except that the first positive electrode active material obtained in '(1) Preparation of Composite Positive Electrode Active Material' and the prepared second positive electrode active material were simply mixed in a weight ratio of 9:1 using a mixer (L5M-A) at 15 rpm for 30 minutes to prepare the positive electrode active material in '(2) Manufacturing of Positive Electrode' of Example 1-1. In the positive electrode active material, the first positive electrode active material and the second positive electrode active material did not exist in the form of an agglomerated assembly but existed in a dispersed state.

### Comparative Example 2

A positive electrode and a rechargeable lithium battery cell were manufactured in substantially the same manner as in Example 2-1, except that, in the process of the section '(2) Manufacturing of Positive Electrode' of Example 2-1, the first positive electrode active material obtained in the process of the section '(1) Preparation of Composite Positive Electrode Active Material' and the prepared second positive electrode active material were simply mixed in a weight ratio of 7:3 using a mixer (L5M-A) at 15 rpm for 30 minutes as the positive electrode active material. In the positive electrode active material, the first positive electrode active material and the second positive electrode active material did not exist in the form of an agglomerated assembly but existed in a dispersed state.

### Comparative Example 3

A positive electrode and a rechargeable lithium battery cell were manufactured in substantially the same manner as in Example 1-1, except that, in the process of the section '(2) Manufacturing of Positive Electrode' of Example 1-1, the fired product before pulverization when preparing the first positive electrode active material in the process of the section '(1) Preparation of Composite Positive Electrode Active Material' was used as the positive electrode active material.

### Evaluation Example 1: Evaluation of Composite Positive Electrode Active Material

### (1) Porosity Evaluation

The porosity of the composite positive electrode active materials prepared in Example 1-1 to 2-2 and Comparative Example 1 was measured and shown in Table 2. Using the Image J image analysis program, a ratio of the area occupied by pores within the cross-section of the secondary particles to the cross-sectional area of the secondary particles was measured from a scanning electron microscope image of the cross-section of the secondary particles of the composite positive electrode active material, and this was expressed as the porosity in Table 2.

### (2) Particle Analysis

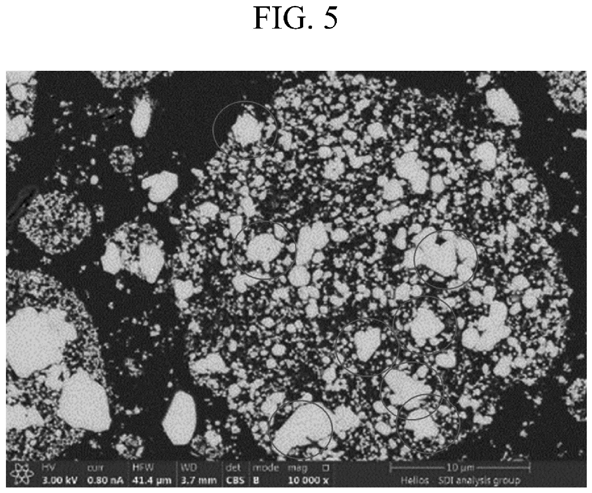

The composite positive electrode active material prepared in Example 2-1 was analyzed by taking a scanning electron microscope image of the cross-section. FIG. 5 is a scanning electron microscope photograph of a cross-section of the composite positive electrode active material prepared in Example 2-1.

In FIG. 5, within a single composite positive electrode active material particle, black indicates internal pores, and gray indicates the first and second positive electrode active materials. Among those marked by gray, the second positive electrode active material refers to particles having a particle size of greater than or equal to about 2 µm, whereas the first positive electrode active material refers to the remaining particles having a particle size of less than about 2 µm, wherein the particle size is defined as a diameter in the case of spherical particles and as a square root of a product of a major axis length and a minor axis length in the case of non-spherical particles.

Referring to FIG. 5, one composite positive electrode active material particle was confirmed to exhibit that a plurality of the first positive electrode active material and the second positive electrode active materials was agglomerated to form an assembly form.

Similar to Example 2-1, the composite positive electrode active materials prepared in Examples 1-1 to 1-4 and Example 2-2 had scanning electron microscope images taken of cross-sections of the positive electrode active materials, and, referring to the images, an average particle diameter of the secondary particles, and an average particle diameter, an arithmetic mean size, and its standard deviation of the primary particles of the first positive electrode active material, and an average particle diameter of the primary particles of the second positive electrode active material were measured and are shown in Table 2.

Specifically, the average particle diameter of the secondary particles was obtained by randomly selecting about 20 secondary particles in the scanning electron microscope image of each of the composite positive electrode active materials, measuring the size of each secondary particle, and calculating an arithmetic mean of the size of each secondary particle, wherein the size of each secondary particle is defined as a diameter in the case of a spherical particle, and as a square root of a product of a major axis length and a minor axis length in the case of a non-spherical particle. The average particle diameter of the primary particles of the first positive electrode active material and the average particle diameter of the primary particles of the second positive electrode active material were also obtained by randomly selecting about 20 primary particles of the first positive electrode active material and about 20 primary particles, respectively, from the second positive electrode active material in the scanning electron microscope image of each composite positive electrode active material, measuring the size of each primary particle, and calculating an arithmetic mean of the size of each primary particle, wherein the size of each primary particle is defined as a diameter in the case of a spherical particle, and as a square root of a product of a major axis length and a minor axis length in the case of a non-spherical particle. In this case, within the composite positive electrode active material, as described above, particles having a particle size of less than about 2 µm are regarded as primary particles of the first positive electrode active material and their particle sizes are measured to obtain an arithmetic mean, whereas particles having a particle size of greater than or equal to about 2 µm are regarded as primary particles of the second positive electrode active material and their particle sizes are measured to obtain an arithmetic mean.

The arithmetic mean size and standard deviation of the first positive electrode active material were obtained by measuring sizes of any 20 primary particles of the first positive electrode active material from the scanning electron microscope image of the cross-section of the composite positive electrode active material-wherein the particle size is defined as a diameter in the case of spherical particles and as a square root of a product of a major axis length and a minor axis length in the case of non-spherical particles-and calculating the arithmetic mean and the standard deviation of the arithmetic mean.

The number of primary particles of the second positive electrode active material in the composite positive electrode active material was determined by counting the number of particles having a particle size of greater than or equal to about 2 µm in the scanning electron microscope image of the cross-section of the composite positive electrode active material, wherein the particle size is defined as a diameter in the case of spherical particles and as a square root of a product of a major axis length and a minor axis length in the case of non-spherical particles. Here, the number of primary particles is an average value of the numbers of primary particles of the second positive electrode active material in a plurality of composite positive electrode active material particles. In Fig. 5, a portion of the second positive electrode active material in one composite positive electrode active material particle is indicated by a circle.

Meanwhile, unlike Examples 1-1 and 2-1, Comparative Examples 1 and 2 (in which the first positive electrode active material and the second positive electrode active material were simply mixed rather than spray-drying the mixture into a dried product and firing the dried product into an assembly form) exhibited that the first and second positive electrode active material were present in a dispersed state and, thus, an evaluation of those Comparative Examples is not provided in Table 2, below. In addition, in the case of Comparative Example 3, only the fired product from the preparing process of the first positive electrode active material was used as the positive electrode active material, and, thus, an evaluation of Comparative Example 3 is not provided in Table 2, below.

**Table 2:**

| | Porosity (%) | Average particle diameter of secondary particles (µm) | Average particle diameter of primary particles of first positive electrode active material (µm) | Arithmetic mean size of primary particles of first positive electrode active material (nm) | Standard deviation of primary particles of first positive electrode active material (nm) | Average particle diameter of primary particles of second positive electrode active material (µm) | The number of second positive electrode active material primary particles in composite positive electrode active material |
|---|---|---|---|---|---|---|---|
| Ex. 1-1 | 16.9 | 15 | 0.5 | 200 | 20.7 | 3 | 3 |
| Ex. 1-2 | 16.5 | 15 | 0.5 | 200 | 20.7 | 3 | 5 |
| Ex. 1-3 | 15.7 | 15 | 0.5 | 200 | 20.7 | 3 | 8 |
| Ex. 1-4 | 14.6 | 15 | 0.5 | 200 | 20.7 | 3 | 10 |
| Ex. 2-1 | 16.2 | 15 | 0.5 | 100 | 13.8 | 3 | 8 |
| Ex. 2-2 | 15.9 | 15 | 0.5 | 100 | 13.8 | 3 | 10 |

Referring to Table 2, the composite positive electrode active materials of Examples 1-1 to 2-2 confirmed that the first positive electrode active material was prepared to have relatively small and uniform primary particles according to its preparation method and also formed with the primary particles of the second positive electrode active material into an assembly form.

### Evaluation Example 2: Pellet Density Evaluation

The pellet density of the (composite) positive electrode active materials of Examples 1-1 to 2-2 and Comparative Examples 1 to 3 were determined by placing 3 g of each of the (composite) positive electrode active materials in a mold, maintaining each of the (composite) positive electrode active materials in the mold at 4 tons for 30 seconds at a temperature of 25°C, measuring a thickness of the pellet, calculating the pellet volume using the thickness of the pellet and the diameter of the mold, and dividing the mass of the (composite) positive electrode active material by the calculated volume.

### Evaluation Example 3: Evaluation of Battery Performance

Battery performance of the rechargeable lithium battery cells manufactured in Examples 1-1 to 2-2 and Comparative Examples 1 to 3 were evaluated at an evaluation voltage of 4.3 V for Comparative Example 3 and 4.45 V for all others.

### (1) Evaluation of Initial Charge/discharge Capacity

The rechargeable lithium battery cells of Examples 1-1 to 2-2 and Comparative Examples 1 to 3 were charged to the evaluation voltage at 0.2 C rate and discharged to a cut-off voltage of 3.0 V at 0.2 C rate at 25°C to measure initial charge/discharge capacity. The results are shown in Tables 3 and 4.

### (2) Average Voltage

The rechargeable lithium battery cells of Examples 1-1 to 2-2 and Comparative Examples 1 to 3 were measured with respect to an average voltage at SOC (State of Charge) 50% during the initial discharge, and the results are shown in Tables 3 and 4.

### (3) Low-temperature Capacity Evaluation

The rechargeable lithium battery cells of Examples 1-1 to 2-2 and Comparative Examples 1 to 3 were fully charged at 0.2 C rate to the evaluation voltage and then discharged to 3.0 V at 0.2 C rate under an atmosphere set at -20°C to measure low-temperature discharge capacity. The results are shown in Tables 3 and 4.

### (4) Cycle-life Characteristics Evaluation

The rechargeable lithium battery cells of Examples 1-1 to 2-2 and Comparative Examples 1 to 3 were 50 times or more repeatedly charged to the evaluation voltage at 1 C rate and then discharged to a cut-off voltage of 3.0 V at 1 C rate after the initial charge and discharge to calculate a ratio of 50^{th} cycle discharge capacity to the initial discharge capacity according to Equation 1, and the results are shown in Tables 3 and 4. Equation 1 is as follows: [Equation 1] $\begin{matrix}Cycle - life \left[%\right] = \left[Discharge capacity at {50}^{th} cycle/Discharge capacity at {1}^{st} cycle\right] \times \\ 100\end{matrix}$

### (5) High-temperature Storage Characteristics Evaluation

The rechargeable lithium battery cells of Examples 1-1 to 2-2 and Comparative Examples 1 to 3 were charged at a 0.2 C rate to a point of 98% SOC and then left in a high-temperature chamber at 45°C for 7 days to calculate a capacity retention rate, and the results are shown in Tables 3 and 4.

### (6) Capacity per Volume Evaluation

The rechargeable lithium battery cells of Examples 1-1 to 2-2 and Comparative Examples 1 to 3 were evaluated with respect to capacity per volume, and the results are shown in Tables 3 and 4. Specifically, the capacity per volume was obtained by multiplying density with capacity.

**Table 3:**

| | Pellet densit y (g/cc) | 0.2C initial charge capacity (mAh/g) | 0.2C initial discharg e capacity (mAh/g) | Averag e voltage (V) | Low temperature (-20°C) discharge capacity (mAh/g) | 1C cycle-life (%, @50 cy) | High temperatur e 45°C capacity retention rate (%) | Capacity per volume (mAh/cc) |
|---|---|---|---|---|---|---|---|---|
| Ex. 1-1 | 2.55 | 166.3 | 158.7 | 3.34 | 100.1 | 97.0 | 85.1 | 400 |
| Ex. 1-2 | 2.65 | 172.4 | 163.4 | 3.38 | 99.2 | 97.6 | 87.4 | 433 |
| Ex. 1-3 | 2.78 | 178.3 | 167.8 | 3.41 | 95.3 | 98.7 | 88.1 | 466 |
| Ex. 1-4 | 2.84 | 185.2 | 173.2 | 3.45 | 92.5 | 97.5 | 87.5 | 492 |
| Comp. Ex. 1 | 2.53 | 165.4 | 156.9 | 3.34 | 98.3 | 96.4 | 75.6 | 397 |
| Comp. Ex. 3 | 2.5 | 165.7 | 161.1 | 3.20 | 87.0 | 97.2 | 85.2 | 394.6 |

**Table 4:**

| | Pellet densit y (g/cc) | 0.2C initial charge capacity (mAh/g) | 0.2C initial discharg e capacity (mAh/g) | Averag e voltage (V) | Low temperature (-20°C) discharge capacity (mAh/g) | 1C cycle-life (%, @50 cy) | High temperatur e 45°C capacity retention rate (%) | Capacity per volume (mAh/cc) |
|---|---|---|---|---|---|---|---|---|
| Ex. 2-1 | 2.65 | 170.5 | 157.4 | 3.63 | 107.7 | 99.2 | 75.2 | 433 |
| Ex. 2-2 | 2.74 | 178.6 | 163.1 | 3.62 | 105.1 | 99.2 | 78.4 | 462 |
| Comp. Ex. 2 | 2.62 | 169.2 | 155.6 | 3.62 | 105.6 | 98.3 | 56.2 | 426 |

Referring to Table 3, in the case of Comparative Example 3, which used the LFP assembly alone, it can be seen that the pellet density was low, the initial charge capacity was relatively low, the average voltage was 3.2 V, which was less than those of the Examples, the low-temperature discharge capacity was significantly less than those of Examples, and the capacity per volume was small. Meanwhile, as shown by Comparative Example 1, which simply mixed the LFP assembly and the second positive electrode active material, the limitations of Comparative Example 3 were overcome, but the high-temperature (45°C) storage characteristics were significantly inferior to Comparative Example 3, which used the LFP assembly alone. Referring to Tables 3 and 4, the mixing weight ratio of the first positive electrode active material and the second positive electrode active material was the same, the rechargeable lithium battery cells including the positive electrode active materials prepared in Examples 1-1 to 1-4 and Examples 2-1 and 2-2 (each having an assembly form) each exhibited a pellet density, an initial discharge capacity, a low-temperature discharge capacity, a 1C cycle-life, a high-temperature capacity retention rate, and a capacity per volume superior to the rechargeable lithium battery cells including the positive electrode active materials prepared in Comparative Example 1 and Comparative Example 2 (each having a form of a simple mixture).

In the case of the rechargeable lithium battery cells including the positive electrode active materials prepared in Comparative Example 1 and Comparative Example 2, the first positive electrode active material and the second positive electrode active material are simply mixed, and an isolation phenomenon occurred between each of particles due to insufficient electrochemical reaction between the different particles, which may result in a decrease in overall battery performance due to a problem with physical connection between the different particles. Particularly, the high-temperature storage characteristics of the rechargeable lithium battery may be significantly deteriorated. Meanwhile, in the case of the positive electrode active materials prepared in Examples 1-1 to 1-4 and Examples 2-1 and 2-2, the above-described problem is solved by agglomerating the different particles of the first positive electrode active material and the second positive electrode active material to form a single secondary particle (i.e., an assembly form). Accordingly, the high-temperature storage characteristics are significantly improved compared to the rechargeable lithium battery cells including the positive electrode active materials prepared in Comparative Example 1 and Comparative Example 2.

While this invention has been described in connection with some embodiments as described above, the present disclosure is not limited to the above-described embodiments. Rather, the present disclosure covers various modifications and equivalent arrangements of the above-described embodiments.

### <Description of Representative Reference Numerals>

- 100: rechargeable lithium battery: 10: positive electrode
- 11: positive electrode lead tab: 12: positive electrode terminal
- 20: negative electrode: 21: negative electrode lead tab
- 22: negative electrode terminal: 30: separator
- 40: electrode assembly: 50: case
- 60: sealer: 70: electrode tab
- 71: positive electrode tab: 72: negative electrode tab

## Claims

1. A composite positive electrode active material having a particle form, the composite positive electrode active material comprising:
a first positive electrode active material in a form of primary particles comprising a lithium iron phosphate-based compound, a plurality of the primary particles of the first positive electrode active material; and
a second positive electrode active material in a form of primary particles comprising a lithium nickel-based composite oxide, a plurality of the primary particles of the second positive electrode active material.

2. The composite positive electrode active material as claimed in claim 1, wherein the lithium iron phosphate-based compound comprises a compound represented by Chemical Formula 1, a compound represented by Chemical Formula 2, or a combination thereof:
[Chemical Formula 1] Liₐ₁Fe₍₁₋ₓ₁₎M¹ₓ₁PO₄,
where0.9≤a1≤1.5, 0≤x1≤0.4, and M¹ is Al, Ca, Ce, Cr, Cu, La, Mg, Mn, Mo, Nb, Ni, Sn, Sr, Ti, V, W, Y, Zn, Zr, or a combination thereof; and
[Chemical Formula 2] Liₐ₂Mnₓ₂Fe_{(1-x2-y2)}M²_{y2}PO₄,
where 0.9≤a2≤1.5, 0.1≤x2≤0.9, 0≤y2<0.9, x2+y2<1, and M² is Al, Ca, Ce, Cr, Cu, La, Mg, Mo, Nb, Ni, Sn, Sr, Ti, V, W, Y, Zn, Zr, or a combination thereof.

3. The composite positive electrode active material as claimed in claim 1 or claim 2, wherein the lithium iron phosphate-based compound comprises Al, Mg, Ti, V, or a combination thereof in an amount ranging from 0.1 mol% to 0.5 mol% based on a total metal of the lithium iron phosphate-based compound, excluding lithium.

4. The composite positive electrode active material as claimed in any one of claims 1 to 3, wherein an average particle diameter of the primary particles of the first positive electrode active material is greater than or equal to 0.1 µm and less than 2 µm.

5. The composite positive electrode active material as claimed in any one of claims 1 to 4, wherein an arithmetic mean size of the primary particles of the first positive electrode active material is less than or equal to 200 nm, and
wherein a standard deviation of an arithmetic mean size of the primary particles of the first positive electrode active material is less than or equal to 100 nm.

6. The composite positive electrode active material as claimed in any one of claims 1 to 5, wherein the first positive electrode active material further comprises a carbon coating layer, positioned on a surface of the primary particles, in an amount ranging from 0.1 wt% to 3.9 wt% based on 100 wt% of the first positive electrode active material.

7. The composite positive electrode active material as claimed in any one of claims 1 to 6, wherein the lithium nickel-based composite oxide is represented by:
Liₐ₃Niₓ₃M³_{y3}M⁴_{z3}O_{2-b3}X_{b3},
where0.9≤a3≤1.2, 0.3≤x3≤1, 0≤y3≤0.7, 0≤z3≤0.7, 0.9≤x3+y3+z3≤1.1, and 0≤b3≤0.1, M³ and M⁴ are each independently Al, B, Ba, Ca, Ce, Co, Cr, Cu, Fe, Mg, Mn, Mo, Nb, Si, Sn, Sr, Ti, V, W, Y, Zn, Zr, or a combination thereof, M³ and M⁴ are different elements, and X is F, P, S, or a combination thereof.

8. The composite positive electrode active material as claimed in any one of claims 1 to 7, wherein, in the lithium nickel-based composite oxide, an amount of nickel is from 50 mol% to 80 mol%, based on 100 mol% of a total metal of the lithium nickel-based composite oxide, excluding lithium.

9. The composite positive electrode active material as claimed in any one of claims 1 to 8, wherein an average particle diameter of the primary particles of the second positive electrode active material is from 2 µm to 8 µm.

10. The composite positive electrode active material as claimed in any one of claims 1 to 9, wherein the particle form of the composite positive electrode active material is a form of secondary particles, and an average particle diameter of secondary particles of the composite positive electrode active material is from 3 µm to 20 µm.

11. The composite positive electrode active material as claimed in any one of claims 1 to 10, wherein the composite positive electrode active material comprises the first positive electrode active material in an amount from 50 wt% to 99 wt% based on 100 wt% of the composite positive electrode active material, and
wherein the composite positive electrode active material comprises the second positive electrode active material in an amount from 1 wt% to 50 wt% based on 100 wt% of the composite positive electrode active material.

12. The composite positive electrode active material as claimed in any one of claims 1 to 11, wherein a number of primary particles of the second positive electrode active material in the composite positive electrode active material is 10 or less.

13. The composite positive electrode active material as claimed in any one of claims 1 to 12, wherein particles of the composite positive electrode active material comprise pores, and
wherein a porosity of particles of the composite positive electrode active material, which is a ratio of an area occupied by the pores to a cross-sectional area of the composite positive electrode active material particles, is from 10% to 50%.

14. A positive electrode comprising:
a positive electrode current collector; and
a positive electrode active material layer being disposed on the positive electrode current collector and comprising the composite positive electrode active material as claimed in any one of claims 1 to 13.

15. A rechargeable lithium battery comprising:
the positive electrode as claimed in claim 14;
a negative electrode; and
an electrolyte.
